# EUROPÄISCHE PATENTSCHRIFT

(11) **EP 0 903 657 B1**
(45) Veröffentlichungstag und Bekanntmachung des Hinweises auf die Patenterteilung: **10.04.2002**
(21) Anmeldenummer: 98112326.8
(22) Anmeldetag: 03.07.1998
(51) Int. Cl.: G05D 22/02, F26B 13/10, G01N 22/04

(54) **Messverfahren zur Bestimmung des Feuchtigkeitsgehaltes einer Faserstoffbahn**
Sensing method for measuring moisture content of a fibrous web
Procédé de mesure pour déterminer le taux d'humidité d'une feuille fibreuse

(30) Priorität: 20.09.1997 DE 19741519
(43) Veröffentlichungstag der Anmeldung: 24.03.1999
(73) Patentinhaber: Voith Paper Patent GmbH, 89522 Heidenheim (DE)
(72) Erfinder: Steiner, Karl, 89542 Herbrechtingen (DE)

(56) Entgegenhaltungen:
- DE-A- 4 325 915
- FR-A- 2 646 537
- US-A- 3 815 019
- US-A- 4 620 146

## Beschreibung

Die Erfindung betrifft ein Meßverfahren sowie die entsprechende Meßanordnung zur Bestimmung des Feuchtigkeitsgehaltes einer Papier-, Textil- oder einer anderen Faserstoffbahn in einer Maschine zur Herstellung und/oder Veredelung der Faserstoffbahn in einem Bereich der Maschine in dem die Faserstoffbahn ohne freien Zug, d. h. nicht ungestützt und dabei zumindest teilweise nur auf einer Seite über wenigstens ein Sieb gestützt verläuft.

Aus der DE-OS 43 25 915 ist ein Verfahren bekannt, bei dem die Faserstoffbahn von Luft durchströmt wird. Anhand des Temperaturvergleichs der einströmenden und der ausströmenden Luft wird dabei auf den Feuchtigkeitsgehalt der Faserstoffbahn geschlossen. Dies ist insbesondere bei hohen Bahngeschwindigkeiten zu ungenau bzw. in Bereichen ohne freien Zug der Faserstoffbahn nicht anwendbar.
In der US 38 15 019 wird ein Meßverfahren beschrieben, bei dem die Messung des Feuchtegehaltes über einen direkten Kontakt mit der Faserstoffbahn erfolgt. Dies ist insbesondere bei hohen Bahngeschwindigkeiten nicht anwendbar.

Die Aufgabe der Erfindung ist es, ein möglichst genaues und auch in Bereichen der Maschine ohne freien Zug einsetzbares Meßverfahren sowie die entsprechende Meßanordung zu schaffen.

Die Aufgabe wird mit den Merkmalen des Verfahrens nach dem Anspruch 1 beziehungsweise mit den Merkmalen der Anordnung nach dem Anspruch 3 gelöst.

Erfindungsgemäß wurde dies dadurch erreicht, daß der Feuchtigkeitsgehalt auf der Basis elektromagnetischer Wellen von der der Faserstoffbahn abgewandten Seite des Siebes aus gemessen wird.

Hierzu sollte das Meßgerät auf der der Faserstoffbahn abgewandten Seite des Siebes und mit möglichst geringem Abstand von diesem angeordnet sein.

Falls dabei das Meßgerät das Sieb berührt, so kann einer möglichen Beschädigung des Siebes vorgebeugt werden, indem an dem Meßgerät Gleitkörper beispielsweise aus Keramik oder rotierbare Rollen angebracht sind.

Dies wird dadurch möglich, weil das Sieb im allgemeinen keinen nennenswerten Widerstand für derartige elektromagnetische Wellen darstellt. Durch die Anordnung des Meßgerätes auf der der Faserstoffbahn abgewandten Seite des Siebes kann eine Beschädigung der Faserstoffbahn ausgeschlossen werden. Außerdem ermöglicht dies die Einhaltung eines konstanten Abstandes zwischen dem Meßgerät und der Faserstoffbahn. Dies ist insbesondere dann gewährleistet, wenn das Meßgerät in den Verlauf des Siebes eintaucht.

Die Frequenz der elektromagnetischen Wellen sollte im Mikrowellenbereich beispielsweise bei ca. 1000 MHz liegen.

Ein besonders genaues, d. h. durch die Feuchtigkeit des Siebes möglichst gering verfälschtes Meßergebnis ergibt sich insbesondere dann, wenn die Feuchtigkeit des Siebes vor der Berührung der Faserstoffbahn auf ein möglichst geringen und möglichst konstanten Wert vermindert wird. Hierzu ist es möglich, das Sieb vor der Berührung der Faserstoffbahn in einer Konditioniereinrichtung zur Verringerung des Feuchtigkeitsgehaltes des Siebes zu beblasen und/oder zu besaugen und/oder zu beheizen.

Um den Einfluß des Feuchtigkeitsgehaltes des Siebes gänzlich auszuschließen, ist es auch möglich, den Feuchtigkeitsgehalt des Siebes vor der Berührung der Faserstoffbahn zu messen und als Korrekturgröße bei der Bestimmung des Feuchtigkeitsgehaltes der Faserstoffbahn zu berücksichtigen. Hierzu kann auf der Seite des Siebes mit dem Meßgerät ein weiteres Meßgerät zur Bestimmung des Feuchtigkeitsgehaltes des Siebes vorzugsweise ebenfalls auf der Basis elektromagnetischer Wellen angeordnet werden.

Zur Ermittlung der Verteilung der Feuchtigkeit über die Breite der Faserstoffbahn sollte das Meßgerät quer zur Faserstoffbahn traversierend angeordnet sein. Es ist dabei natürlich auch möglich, mehrere Meßgeräte einzusetzen.

Eingesetzt wird das Meßverfahren sowie die Meßanordnung mit Vorteil in Sieb-, Pressen- und Trockenpartien von Papiermaschinen.

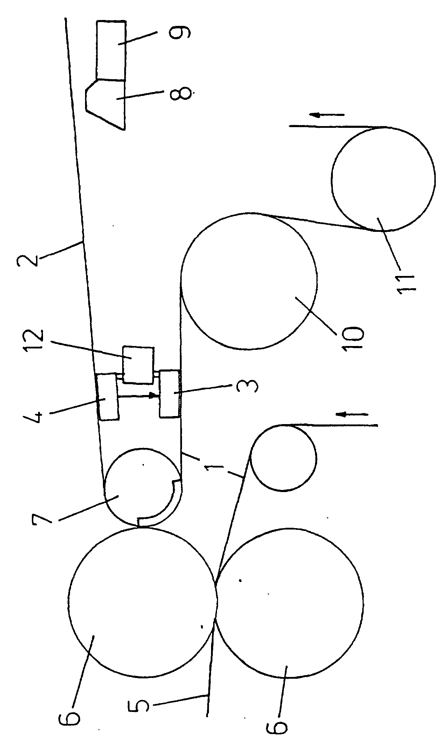

Nachfolgend soll die Erfindung an einem Ausführungsbeispiel näher erläutert werden. In der beigefügten Zeichnung zeigt die Figur einen Teil einer Papiermaschine, in der die Faserstoffbahn 1 gemeinsam mit einem Preßfilz 5 zur Entwässerung durch einen von zwei Preßwalzen 6 gebildeten Preßspalt verläuft. Anschließend umschlingt die Faserstoffbahn 1 einen größeren Umfangsbereich der vorzugsweise glatten und beheizten oberen Preßwalze 6. Von dort wird sie von einer von einem Sieb 2 in Form eines Trockensiebes umschlungenen Leitwalze 7 abgenommen und in die im wesentlichen von beheizten Trokkenzylindern 10 und Leitwalzen 11 gebildeten Trockenpartie geführt.

Im gesamten dargestellten Bereich ist die Faserstoffbahn 1 zwischen den Walzen von dem Preßfilz 5 bzw. dem Sieb 2 auf einer Seite gestützt. Um die Heizleistung der Trockenpartie steuern zu können, wird hier der Feuchtigkeitsgehalt der Faserstoffbahn 1 am Beginn der Trockenpartie über ein Meßgerät 3 auf der Basis elektromagnetischer Wellen im Mikrowellenbereich gemessen. Dieses Meßgerät 3 berührt die der Faserstoffbahn 1 abgewandte Seite des Siebes 2 zwischen der besaugten Leitwalze 7 und dem Trockenzylinder 10.

Bevor das Sieb 2 die Faserstoffbahn 1 übernimmt, wird der Feuchtigkeitsgehalt des Siebes 2 auf einen möglichst geringen und konstanten Wert vermindert. Dies erfolgt über eine Konditioniereinrichtung. Dabei wird die Faserstoffbahn 1 über einen Infrarottrockner 9 beheizt und anschließend über einen sich ebenfalls quer zur Faserstoffbahn 1 erstreckenden Blaskasten 8 beblasen.

Um die dennoch verbliebene Restfeuchtigkeit des Siebes 2 berücksichtigen zu können, wird der Feuchtigkeitsgehalt des Siebes 2 zwischen der Konditioniereinrichtung und der besaugten Leitwalze 7 über ein weiteres Meßgerät 4 auf der Basis elektromagnetischer Wellen im Mikrowellenbereich gemessen. Beide Meßgeräte 3 und 4 befinden sich dabei auf der Innenseite des endlosen Siebes 2. Der Meßwert des zusätzlichen Meßgerätes 4 wird hier dem Meßgerät 3 zur Bestimmung des Feuchtigkeitsgehaltes der Faserstoffbahn 1 zugeführt und wird dort insbesondere bei einer Veränderung des Feuchtigkeitsgehaltes des Siebes 2 berücksichtigt.

Außerdem sind beide Meßgeräte 3 und 4 an einem quer zur Faserstoffbahn 1 verlaufenden Träger 12 befestigt. Dies ermöglicht es, daß die Meßgeräte 3 und 4 quer zur Faserstoffbahn 1 traversieren, so daß die Verteilung des Feuchtigkeitsgehaltes der Faserstoffbahn 1 bzw. des Siebes 2 ermittelt werden kann.

## Patentansprüche

1. Messverfahren zur Bestimmung des Feuchtigkeitsgehaltes einer Papier-, Textil- oder einer anderen Faserstoffbahn (1) in einer Maschine zur Herstellung und/oder Veredelung der Faserstoffbahn (1) in einem Bereich der Maschine in dem die Faserstoffbahn (1) ohne freien Zug, d. h. nicht ungestützt und dabei zumindest teilweise nur auf einer Seite über wenigstens ein Sieb (2) gestützt verläuft, **dadurch gekennzeichnet, dass**
der Feuchtigkeitsgehalt auf der Basis elektromagnetischer Wellen von der der Faserstoffbahn (1) abgewandten Seite des Siebes (2) aus gemessen wird, wobei die Feuchtigkeit des Siebes (2) vor der Berührung der Faserstoffbahn (1) auf einen möglichst geringen und möglichst konstanten Wert vermindert und/oder der Feuchtigkeitsgehalt des Siebes (2) vor der Berührung der Faserstoffbahn (1) gemessen und als Körrekturgröße bei der Bestimmung des Feuchtigkeitsgehaltes der Faserstoffbahn (1) berücksichtigt wird.

2. Messverfahren nach Anspruch 1, **dadurch gekennzeichnet, dass**
die Frequenz der elektromagnetischen Wellen im Mikrowellenbereich liegt.

3. Messanordnung zur Durchführung des Verfahrens zur Bestimmung des Feuchtigkeitsgehaltes einer Papier-, Textil- oder einer anderen Faserstoffbahn (1) in einer Maschine zur Herstellung und/oder Veredelung der Faserstoffbahn (1) in einem Bereich der Maschine in dem die Faserstoffbahn (1) ohne freien Zug, d. h. nicht ungestützt und dabei zumindest teilweise nur auf einer Seite über wenigstens ein Sieb (2) gestützt verläuft nach Anspruch 1 oder 2,
**dadurch gekennzeichnet, dass**
das Messgerät (3) zur Bestimmung des Feuchtigkeitsgehaltes der Faserstoffbahn (1) auf der Basis elektromagnetischer Wellen auf der der Faserstoffbahn (1) abgewandten Seite des Siebes (2) und mit möglichst geringem Abstand von diesem angeordnet ist, wobei das Sieb (2) vor der Berührung der Faserstoffbahn (1) in einer Konditioniereinrichtung zur Verringerung der Feuchte des Siebes (2) beblasen und/oder besaugt und/oder beheizt wird und/oder vor der Berührung der Faserstoffbahn (1) ein weiteres Messgerät (4) zur Bestimmung des Feuchtigkeitsgehaltes des Siebes (2) angeordnet ist.

4. Messanordnung nach Anspruch 3, **dadurch gekennzeichnet, dass**
das Messgerät (3) das Sieb (2) berührt

5. Messanordnung nach Anspruch 3 oder 4, **dadurch gekennzeichnet, dass**
das Messgerät (3) quer zur Faserstoffbahn (1) traversierend angeordnet ist.

6. Anwendung des Messverfahrens und der Messordnung nach einem der Ansprüche 1 bis 5 in Sieb-, Pressen- oder Trockenpartien.

## Claims

1. Measuring method for determining the moisture content of a paper, textile or other fibrous web (1) in a machine for producing and/or finishing the fibrous web (1) in an area of the machine in which the fibrous web (1) runs without a free draw, that is to say not unsupported and in this case supported at least partly on only one side via at least one fabric (2), **characterized in that** the moisture content is measured from the side of the fabric (2) facing away from the fibrous web (1) on the basis of electromagnetic waves, the moisture of the fabric (2), before it contacts the fibrous web (1), being reduced to the lowest possible and most constant possible value and/or the moisture content of the fabric (2), before it contacts the fibrous web (1) being measured and taken into account as a corrective variable when determining the moisture content of the fibrous web (1).

2. Measuring method according to Claim 1, **characterized in that** the frequency of the electromagnetic waves lies in the microwave range.

3. Measuring arrangement for carrying out the method for determining the moisture content of a paper, textile or other fibrous web (1) in a machine for producing and/or finishing the fibrous web (1) in an area of the machine in which the fibrous web (1) runs without a free draw, that is to say not unsupported, and in this case at least partially supported only on one side by at least one fabric (2), according to Claim 1 or 2, **characterized in that** the measuring instrument (3) for determining the moisture content of the fibrous web (1) on the basis of electromagnetic waves is arranged on the side of the fabric (2) facing away from the fibrous web (1) and at the smallest possible distance from the said fabric, the fabric (2), before contacting the fibrous web (1), having blown air and/or vacuum and/or heating applied to it in a conditioning device for reducing the moisture of the fabric (2) and/or, before contacting the fibrous web (1), a further measuring instrument (4) for determining the moisture content of the fabric (2) being arranged.

4. Measuring arrangement according to Claim 3, **characterized in that** the measuring instrument (3) touches the fabric (2).

5. Measuring arrangement according to Claim 3 or 4, **characterized in that** the measuring instrument (3) is arranged so as to traverse transversely with respect to the fibrous web (1).

6. Use of the measuring method and the measuring arrangement according to one of Claims 1 to 5 in wire sections, press sections or drying sections.

## Revendications

1. Procédé de mesure pour la détermination de la teneur en humidité d'une bande de papier, de textile ou d'une autre matière fibreuse (1) dans une machine pour la fabrication et/ou le façonnage de la bande de matière fibreuse (1) dans une région de la machine dans laquelle la bande de matière fibreuse (1) défile sans tronçon libre, c'est-à-dire non sans appui et en l'occurrence soutenue au moins en partie uniquement sur une face par au moins une toile (2), **caractérisé en ce que** l'on mesure la teneur en humidité sur la base d'ondes électromagnétiques à partir de la face de la toile (2) située à l'opposé de la bande de matière fibreuse (1), dans lequel l'humidité de la toile (2) est abaissée à une valeur aussi basse et aussi constante que possible avant le contact avec la bande de matière fibreuse (1) et/ou la teneur en humidité de la toile (2) est mesurée avant le contact avec la bande de matière fibreuse (1) et considérée comme une grandeur de correction lors de la détermination de la teneur en humidité de la bande de matière fibreuse (1).

2. Procédé de mesure suivant la revendication 1, **caractérisé en ce que** la fréquence des ondes électromagnétiques est située dans le domaine des micro-ondes.

3. Dispositif de mesure pour la mise en oeuvre du procédé pour la détermination de la teneur en humidité d'une bande de papier, de textile ou d'une autre matière fibreuse (1) dans une machine pour la fabrication et/ou le façonnage de la bande de matière fibreuse (1) dans une région de la machine dans laquelle la bande de matière fibreuse (1) défile sans tronçon libre, c'est-à-dire non sans appui et en l'occurrence soutenue au moins en partie uniquement sur une face par au moins une toile (2) suivant la revendication 1 ou 2, **caractérisé en ce que** l'appareil de mesure (3) pour la détermination de la teneur en humidité de la bande de matière fibreuse (1) sur la base d'ondes électromagnétiques est disposé sur la face de la toile (2) située à l'opposé de la bande de matière fibreuse (1) et à une distance aussi faible que possible de celle-ci, la toile (2) étant exposée à un soufflage et/ou à une aspiration et/ou à un chauffage dans un dispositif de conditionnement afin de réduire l'humidité de la toile (2) avant le contact avec la bande de matière fibreuse (1) et/ou un autre appareil de mesure (4) étant disposé en vue de déterminer la teneur en humidité de la toile (2) avant le contact avec la bande de matière fibreuse (1).

4. Dispositif de mesure suivant la revendication 3, **caractérisé en ce que** l'appareil de mesure (3) touche la toile (2).

5. Dispositif de mesure suivant la revendication 3 ou 4, **caractérisé en ce que** l'appareil de mesure (3) est disposé transversalement par rapport à la bande de matière fibreuse (1).

6. Utilisation du procédé de mesure et du dispositif de mesure suivant l'une quelconque des revendications 1 à 5 dans des sections de toiles, des sections de presses ou des sections de séchage.
